# EUROPEAN PATENT SPECIFICATION

(11) **EP 3 854 989 B1**
(45) Date of publication and mention of the grant of the patent: **15.05.2024**
(21) Application number: 19862328.2
(22) Date of filing: 17.07.2019
(51) Int. Cl.: E21B 47/14, E21B 47/26, E21B 47/00, H04B 11/00, H04B 7/185, H04W 4/00, E21B 41/00

(54) **SYSTEM AND METHOD FOR MONITORING DISCONNECTED WELLS**
SYSTEM UND VERFAHREN ZUR ÜBERWACHUNG VON ABGETRENNTEN BOHRLÖCHERN
SYSTÈME ET PROCÉDÉ DE SURVEILLANCE DE PUITS NON RACCORDÉS

(30) Priority: 21.09.2018 BR 102018069281
(43) Date of publication of application: 28.07.2021
(73) Proprietor: Petroleo Brasileiro S.A. - PETROBRAS, 20031-912 Rio de Janeiro (BR)
(72) Inventor: DA SILVA NOBREGA, Marcos Vinicius, 22030-040 Rio de Janeiro, RJ (BR); ALBUQUERQUE DE SOUZA, Marcio, 22775-045 Rio de Janeiro, RJ (BR); LISBOA SANTOS, Hugo Francisco, 22461-020 Rio de Janeiro, RJ (BR); HERNALSTEENS, Cedric, 24358-240 Niterói, RJ (BR)
(74) Representative: Clarke, Modet y Cía., S.L.
(86) International application number: PCT/BR2019/050278
(87) International publication number: WO 2020/056474

(56) References cited:
- EP-B1- 0 922 836
- WO-A1-02/04785
- WO-A2-2012/065023
- CN-A- 103 427 913
- CN-U- 202 190 267
- GB-A- 2 459 488
- US-A1- 2006 033 638
- US-A1- 2013 248 171
- US-B2- 7 123 162
- US-B2- 9 103 204

## Description

### FIELD OF THE INVENTION

The present invention relates to the monitoring of subsea oil wells. More specifically, the present invention relates to the monitoring of disconnected subsea oil wells.

### BACKGROUND OF THE INVENTION

According to the legislation in force, all subsea oil wells that have been disconnected for more than three years must have monitoring mechanisms to alert to the occurrence of unsafe conditions that may lead to an environmental incident.

Disconnected subsea oil wells are currently monitored by means of a portable system that queries the instruments of a Wet Christmas Tree (WCT) and that has the capacity to query and store data in a short time frame, while connected. However, that system needs the support of a specialized vessel and ROV to perform the subsea connection and to collect data. Furthermore, the data collection must be repeated periodically, which results in significant monitoring costs.

Continuous subsea monitoring systems are known in the state of the technique, as shown in the following examples.

Document CN1804923A reveals an automatic monitoring system for long-term anchorage in deep water that comprises: a monitoring structure, a sensor, a data collection module, a long-distance wireless acoustic model, and a fixed cell on the structure. The data collection module is connected to the module of the data communication system; the data communication system module transmits the data from monitoring after processing from the data collection system module to the long-distance wireless acoustic modem by the series interface; the modem is connected to the computer by the microprocessor and by the standard series interface, which may transmit the data to the computer.

Document US7261162B2 reveals a subsea communication system in which the data collected by sensors in the well are transmitted to the surface by a subsea communication module. That document further reveals that the data should preferably be sent using fiber optic systems. Documents US2013248171-A1, US2006033638-A1, WO0204785-A1 and WO2012065023-A2 relate to method and systems for well management and subsea wireless communication.

However, neither of the documents mentioned above specifically discusses monitoring of disconnected wells. Furthermore, in the event of a communication failure between the subsea monitoring systems and the vessels/platforms on the surface, there is no backup system capable of issuing an alert if there is an incident at the well. For the case of disconnected wells, for example, an incident at a well can cause immeasurable environmental damage.

As will be better detailed below, the present invention seeks to resolve the problem described above in the state of the technique in a practical and efficient manner.

### SUMMARY OF THE INVENTION

The main purpose of the present invention is to provide a system and a method for monitoring disconnected wells that is low cost and very efficient, to provide alerts regarding any incidents and the well and/or the WCT.

In order to attain the objective described above, the present invention provides a system for monitoring subsea oil wells according to the appended claims.

The present invention further provides a method for monitoring subsea oil wells according to the appended claims.

### BRIEF DESCRIPTION OF THE FIGURES

The detailed description presented below references the attached figures and their respective reference numbers.
Figure 1 contains a block diagram of the monitoring system according to this invention.
Figure 2 contains an isometric schematic view of the system according to this invention.

### DETAILED DESCRIPTION OF THE INVENTION

First, it is noted that the following description will start from a preferred embodiment of the invention. As will be evident to anyone versed the matter, however, the invention is not limited to this specific embodiment.

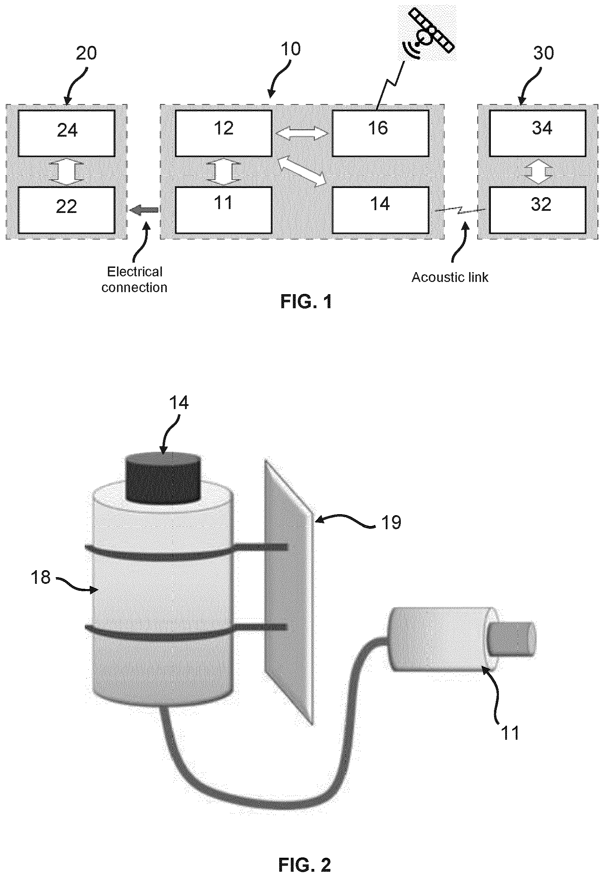

**Figure 1** contains a block diagram of the monitoring system according to this invention. **Figure 2****,** in turn, contains an isometric schematic view of the system according to this invention.

As can be seen in **Figure 1****,** the monitoring system for disconnected wells **10** of the present invention is connected to the WCT **20** preferably by means of a connection through an electrical cable. The WCT **20** preferably contains a connection panel **22,** where a connecting element **11** of the system of the present invention is connected. The connection panel **22** is connected to the sensors **24** located in the well (PDG) and to the monitoring sensors of the WCT itself **20.**

The system of the present invention comprises means for acquiring and processing monitoring data from the WCT and/or from the well. Preferably, the means for acquiring and processing are a central processing unit **12.** Optionally, the central processing unit **12** also functions as a means for storing the collected data.

The central processing unit **12** is responsible for autonomously controlling the reading and storage of the data from the sensors installed on the WCT **20** and in the well.

The system of the present invention further comprises means for verifying the monitoring data from the WCT **20** and/or from the well, and comparing them to predetermined values. In other words, the system of the present invention evaluates whether the monitoring data are inside a control envelope (normal conditions). Preferably, the central processing unit **12** is also responsible for verification of the data.

If the data are not within the control envelope, and means of signaling is activated to signal the detection of an abnormality in the verified data.

The means of signaling may be, for example, a subsea hydroacoustic model **14** designed to send to a receiving system on the surface **30** at least one signal in the event an abnormality is detected. Preferably, the receiving system on the surface **30** comprises a surface hydroacoustic modem **32.**

In an alternative embodiment, the subsea hydroacoustic modem **14** may send data detected at the WCT and/or the well periodically or from an inquiry from the surface hydroacoustic system **32,** even if the system has not detected an abnormality in the monitoring parameters.

The central processing unit **12** may, for example, store the data in the subsea hydroacoustic model **14** and the latter remains on *stand-by* until it is queried by the surface hydroacoustic modem **32.** Once queried, the subsea hydroacoustic modem **14** sends the data to the surface hydroacoustic modem **32** which transmits the data to a monitoring center **34.**

Preferably, as shown in **Figure 2****,** this system is physically comprised of: (i) an electrical connector **11** and electric jumper, which create the interface with the panel **22** of the WCT **20;** (ii) pressure vessel **18** containing in its interior the central processing unit and battery for power; (iii) subsea hydroacoustic modem **14;** and (iv) magnetic connector **19,** which couples the system in the structure of the WCT **20.**

Alternatively, the means for signaling may be, for example, a subsea buoy release system **16,** wherein the buoys comprise means for transmitting signals from the ocean surface to a monitoring satellite, the buoys being released upon detection of an abnormality. In this embodiment, the subsea buoy release system **16** is controlled by the central processing unit **12.**

Preferably, the subsea buoy release system **16** comprises a receptacle (not shown) designed to house a plurality of buoys. The receptacle is provided with an individual release mechanism for the buoys.

Each buoy preferably comprises embedded electronics designed for data storage and transmission (broadcast) on a telecommunications satellite frequency bandwidth with the capacity to be captured by a monitoring satellite. The central processing unit **12** downloads the data from the WCT and from the well into the buoy storage system and releases it in the direction of the surface. Once on the surface, the buoy transmits the data to monitoring satellites that retransmit the information to landbased monitoring centers.

The present invention further provides a method for monitoring disconnected wells associated with the system described above, comprising the steps of:
(i) acquisition and processing of the monitoring data from the WCT **20** and/or from the well, in which the means for acquisition and processing **12** are connected to the sensors on the WCT **20** and/or the well;
(ii) verifying the monitoring data from the WCT **20** and/or from the well, and comparing them to predetermined values;
(iii) sending, from the means for signaling **14, 16,** at least one signal in the event that any abnormality is detected through comparison of the data with the predetermined values.

It is noted that all the operating steps of the system described above also apply to the present monitoring method.

The scope of protection is provided by the appended claims.

## Claims

1. A system for monitoring subsea oil wells, the system comprising:
means for acquiring and processing the monitoring data from the WCT (20) and/or the well, the means for acquiring and processing being connected to the sensors of the WCT (20) and/or of the well;
means for verifying the monitoring data from the WCT (20) and/or from the well, and comparing them to predetermined values;
means for signaling (14, 16) designed to send at least one signal in the event that an abnormality is detected by comparing the data with the predetermined values; and
means for storing monitoring data from the WCT (20) and/or from the well;
wherein the means for acquiring and processing, the means for verifying and the means for storing contain at least one central processing unit (12) connected to the sensors of the WCT (20) and/or of the well;
**characterized in that** the at least one central processing unit (12) is housed inside a pressure vessel (18) attached to the WCT structure (20) by means of a magnetic connector (19).

2. The system of claim 1, wherein the means of signaling are at least one of:
a subsea hydroacoustic model (14) designed to send to a surface hydroacoustic modem (32) at least one signal in the event that an abnormality is detected;
at least one subsea buoy release system, wherein the buoys comprise means for transmitting signals from the ocean surface to a monitoring satellite, the buoys being released upon detection of an abnormality.

3. A method for monitoring subsea oil wells, the method comprising the steps of:
acquisition and processing of the monitoring data from the WCT (20) and/or from the well;
verifying the monitoring data from the WCT (20) and/or from the well, and comparing them to predetermined values; and
sending, by means for signaling (14, 16), at least one signal in the event that an abnormality is detected through comparison of the data with the predetermined values; and
storing monitoring data from the WCT (20) and/or from the well;
wherein the acquisition and processing, the verifying and the storing is performed by at least one central processing unit (12) connected to the sensors of the WCT (20) and/or of the well;
**characterized in that** the at least one central processing unit (12) is housed inside a pressure vessel (18) attached to the WCT structure (20) by means of a magnetic connector (19).

## Patentansprüche

1. System zur Überwachung von Unterwasser-Ölbohrlöchern, wobei das System Folgendes umfasst:
Mittel zum Erfassen und Verarbeiten der Überwachungsdaten von dem WCT (Eruptionskreuz) (20) und/oder dem Bohrloch, wobei die Mittel zum Erfassen und Verarbeiten mit den Sensoren des WCT (20) und/oder des Bohrlochs verbunden sind;
Mittel zum Verifizieren der Überwachungsdaten von dem WCT (20) und/oder dem Bohrloch und zum Vergleichen derselben mit vorbestimmten Werten;
Mittel zum Signalisieren (14, 16), die dazu ausgelegt sind, mindestens ein Signal zu senden, falls eine Anomalie erkannt wird, indem die Daten mit den vorbestimmten Werten verglichen werden; und
Mittel zum Speichern von Überwachungsdaten von dem WCT (20) und/oder von dem Bohrloch;
wobei die Mittel zum Erfassen und Verarbeiten, die Mittel zum Verifizieren und die Mittel zum Speichern mindestens einen Hauptprozessor (12) enthalten, der mit den Sensoren des WCT (20) und/oder des Bohrlochs verbunden ist;
**dadurch gekennzeichnet, dass** der mindestens eine Hauptprozessor (12) im Inneren eines Druckbehälters (18) aufgenommen ist, der mittels einem magnetischen Verbinder (19) an der WCT-Struktur (20) angebracht ist.

2. System nach Anspruch 1, wobei die Mittel zum Signalisieren mindestens eines der Folgenden sind:
ein hydroakustisches Unterwassermodell (14), das dazu ausgelegt ist, mindestens ein Signal an ein hydroakustisches Oberflächenmodem (32) zu senden, falls eine Anomalie erkannt wird;
mindestens ein Unterwasserbojenfreigabesystem, wobei die Bojen Mittel zum Übertragen von Signalen von der Meeresoberfläche zu einem Überwachungssatelliten umfassen, wobei die Bojen beim Erkennen einer Anomalie freigegeben werden.

3. Verfahren zur Überwachung von Unterwasser-Ölbohrlöchern, wobei das Verfahren folgende Schritte umfasst:
Erfassen und Verarbeiten der Überwachungsdaten von dem WCT (20) und/oder von dem Bohrloch;
Verifizieren der Überwachungsdaten von dem WCT (20) und/oder von dem Bohrloch und Vergleichen derselben mit vorbestimmten Werten; und
Senden mindestens eines Signals durch Mittel zum Signalisieren (14, 16) in dem Fall, dass eine Anomalie durch Vergleich der Daten mit den vorbestimmten Werten erkannt wird; und
Speichern von Überwachungsdaten von dem WCT (20) und/oder von dem Bohrloch;
wobei das Erfassen und Verarbeiten, das Verifizieren und das Speichern durch mindestens einen Hauptprozessor (12) durchgeführt wird, der mit den Sensoren des WCT (20) und/oder des Bohrlochs verbunden ist;
**dadurch gekennzeichnet, dass** der mindestens eine Hauptprozessor (12) im Inneren eines Druckbehälters (18) aufgenommen ist, der mittels einem magnetischen Verbinder (19) an der WCT-Struktur (20) angebracht ist.

## Revendications

1. Système de surveillance de puits de pétrole sous-marins, le système comprenant :
des moyens d'acquisition et de traitement des données de surveillance à partir du WCT (20) et/ou du puits, les moyens d'acquisition et de traitement étant reliés aux capteurs du WCT (20) et/ou du puits ;
des moyens de vérification des données de surveillance à partir du WCT (20) et/ou du puits, et de comparaison de ceux-ci avec des values prédéterminées ;
des moyens de signalisation (14, 16) conçus pour envoyer au moins un signal en cas de détection d'une anomalie par comparaison des données avec les values prédéterminées ; et
des moyens de stockage de données de surveillance à partir du WCT (20) et/ou à partir du puits ;
dans lequel les moyens d'acquisition et de traitement, les moyens de vérification et les moyens de stockage contiennent au moins une unité centrale de traitement (12) reliée aux capteurs du WCT (20) et/ou du puits ;
**caractérisé en ce que** l'au moins une unité centrale de traitement (12) est logée à l'intérieur d'un récipient sous pression (18) fixé à la structure de WCT (20) par le biais d'un connecteur magnétique (19).

2. Système selon la revendication 1, dans lequel les moyens de signalisation sont au moins l'un parmi :
un modèle hydroacoustique sous-marin (14) conçu pour envoyer à un modem hydroacoustique de surface (32) au moins un signal en cas de détection d'une anomalie ;
au moins un système de largage de bouées sous-marin, dans lequel les bouées comprennent des moyens de transmission de signaux depuis la surface de l'océan jusqu'à un satellite de surveillance, les bouées étant larguées après la détection d'une anomalie.

3. Procédé de surveillance de puits de pétrole sous-marins, le procédé comprenant les étapes de :
acquisition et traitement des données de surveillance à partir du WCT (20) et/ou à partir du puits ;
vérification des données de surveillance à partir du WCT (20) et/ou à partir du puits, et comparaison de ceux-ci avec des values prédéterminées ; et
envoie, par le biais de signalisation (14, 16), d'au moins un signal en cas de détection d'une anomalie par comparaison des données avec les values prédéterminées ; et
stockage de données de surveillance à partir du WCT (20) et/ou à partir du puits ;
dans lequel l'acquisition et le traitement, la vérification et le stockage sont réalisés par au moins une unité centrale de traitement (12) reliée aux capteurs du WCT (20) et/ou du puits ;
**caractérisé en ce que** l'au moins une unité centrale de traitement (12) est logée à l'intérieur d'un récipient sous pression (18) fixé à la structure de WCT (20) par le biais d'un connecteur magnétique (19).
